# EUROPEAN PATENT SPECIFICATION

(11) **EP 2 310 963 B1**
(45) Date of publication and mention of the grant of the patent: **27.03.2013**
(21) Application number: 09787983.7
(22) Date of filing: 29.06.2009
(51) Int. Cl.: G06F 17/30

(54) **INFORMATION OUTPUT APPARATUS, INFORMATION OUTPUT METHOD, AND RECORDING MEDIUM**
INFORMATIONSAUSGABEVORRICHTUNG, INFORMATIONSAUSGABEVERFAHREN UND AUFZEICHNUNGSMEDIUM
APPAREIL DE SORTIE D'INFORMATIONS, PROCÉDÉ DE SORTIE D'INFORMATIONS ET SUPPORT D'ENREGISTREMENT

(30) Priority: 18.07.2008 JP 2008187328
(43) Date of publication of application: 20.04.2011
(73) Proprietor: Casio Computer Co., Ltd., Tokyo 151-8543 (JP)
(72) Inventor: TOMIDA, Takahiro, Tokyo 205-8555 (JP)
(74) Representative: Grünecker, Kinkeldey, Stockmair & Schwanhäusser
(86) International application number: PCT/JP2009/062239
(87) International publication number: WO 2010/007908

(56) References cited:
- WO-A-2005/008436
- WO-A-2006/090281
- US-A1- 2006 067 343
- US-A1- 2007 094 591
- US-A1- 2008 068 385

## Description

### Technical Field

This invention relates to an information output apparatus, an information output method, and a recording medium which are for causing a browser to output a Web page acquired by a client unit from, for example, a server unit to enable the user to browse the Web page.

### Background Art

In a recent client-server system as typified by the Internet, a wide-area network (WAN), or a local-area network (LAN), it is common practice to cause a browser to output a Web page loaded from a server unit into a client unit, thereby enabling the user to browse the Web page.

The Web page offered by the server unit is generally created in such a manner that the character size (or font size), color, and shape are changed according to each different piece of information dealt with in the divided areas of the page, for example, according to the attention-grabbing level, taking into account the balance of the entire page.

As a client unit, a terminal device whose display screen size differs variously, such as a personal computer (PC), a personal digital assistant (PDA), or a mobile phone, is used.

Therefore, when browsing a Web page on a relatively large display screen of a terminal device, such as a PC, the user can sufficiently read the information displayed even in a small font size. However, when browsing the Web page on a small display screen of, for example, a mobile phone, the user might not sufficiently read the information displayed in the same small font size. Conversely, the information displayed in a large font size is displayed widely on the small display screen, making it difficult to grasp the whole information.

To overcome this problem, "a method of and system for improving the readability of text" have been considered (refer to, e.g., Jpn. Pat. Appln. KOKAI Publication No. 2007-122708). In the method and system, when text is displayed on a display unit, the font size of the text is changed so as to be not smaller than the limit value of the readable font size.

With "the method of and system for improving the readability of text," characters smaller than the limit value of the readable font size are increased uniformly in their size until the limit value of the readable font size has been exceeded. Accordingly, unreadable characters can be eliminated. However, in a Web page where text items of various font sizes are mixed together consciously to represent highlighted information and non-highlighted information, the correlation in conspicuousness between the text items collapses, which causes the problem of impairing the strong and weak information image of the entire page taken into account at the time of creating the page.

### Disclosure of Invention

It is, accordingly, an object of the invention to provide an information output apparatus, an information output method, and a recording medium which enable all characters to be read sufficiently without impairing the strong and weak information image of the entire page.

According to an aspect of the invention, there is provided an information output apparatus comprising: a size distribution extraction module which extracts the frequency of use for each of the font sizes of the text items included in the display data; a size decision module which determines a font size whose frequency of use is high in the frequencies of use for the individual font sizes extracted by the size distribution extraction module; a size change module which changes the font sizes of the text items included in the display data to the specific font size set by the size setting module; and a style change module which changes to a first font style the font styles of the text items included in the display data as a font size smaller than the font size whose frequency of use is determined to be high by the size decision module before the size change in the text items changed to the specific font size by the size change module and which further changes to a second font style the font styles of the text items included in the display data as a font size larger than the font size whose frequency of use is determined to be high by the size decision module.

According to another aspect of the invention, there is provide a recording medium in which a program capable of causing a computer to realize the main functions of the information output apparatus of the invention has been recorded.

With the information output apparatus of the invention, all characters can be read sufficiently without impairing the strong and weak information image of the entire page.

### Brief Description of Drawings

FIG. 1 is a block diagram showing the configuration of a client-server system according to an embodiment of an information output apparatus of the invention;
FIG. 2 is a block diagram showing the circuit configuration of a server unit 10 in the client-server system;
FIG. 3 is a block diagram showing the circuit configuration of a client unit 20 in the client-server system;
FIG. 4 shows the contents of a data memory secured in a RAM 24 of the client unit 20;
FIG. 5 shows an example of a Java (registered trademark) script program for extracting the font size of text displayed on a Web page;
FIG. 6 shows an example of a Java (registered trademark) script program for changing the font size of text displayed on a Web page;
FIG. 7 shows an example of a Java (registered trademark) script program for changing the font style of text displayed on a Web page, (a) being a program for changing the font style to an italic font and (b) being a program for changing the font style to a bold font;
FIG. 8 is a flowchart to explain the process of extracting the font size distribution on a Web page at the client unit 20;
FIG. 9 is a flowchart to explain a Web-page font changing process at the client unit 20;
FIG. 10 is a diagram showing font size distribution data before a change made by a Web-page font changing process at the client unit 20;
FIG. 11 is a table showing the descriptions of the font size and font style after a change on the basis of the most-frequently-used font size (Sdominant) set in the Web-page font changing process at the client unit 20;
FIG. 12 is a diagram showing a comparison between a page display state (a) before a change and a page display state (b) after the change in the Web-page font changing process at the client unit 20;
FIG. 13 shows a page display state after the change of the font size/color style in the Web-page font changing process in another embodiment (1) of the client unit 20;
FIG. 14 shows an example of a Java (registered trademark) script program for changing the color font style of text displayed on a Web page;
FIG. 15 shows a page display state after the change of the font size/character style and color style in the Web-page font changing process in still another embodiment (2) of the client unit 20; and
FIG. 16 shows an example of a Java (registered trademark) script program for changing the line spacing of text displayed on a Web page.

### Best Mode for Carrying Out the Invention

Hereinafter, referring to the accompanying drawings, embodiments of the invention will be explained.

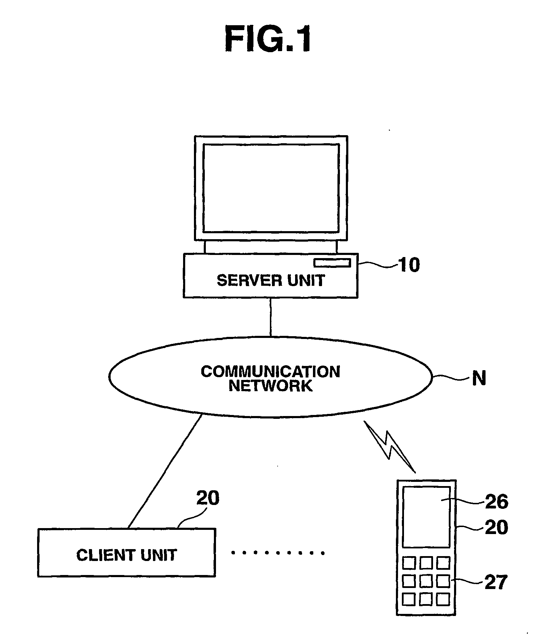

FIG. 1 is a block diagram showing the configuration of a client-server system according to an embodiment of an information output apparatus of the invention.

The client-server system includes a plurality of client units 20, ... and a server unit 10 which are connected to a network N composed of the Internet, WANs, LANs, and the like.

The server unit 10 has a plurality of application programs activated by operating the server unit 10, including a Web page creation program, a registered user management program, a Web page delivery program, a mailing program, and a word-processing program. In response to access requests from the client units 20, ... user-registered in, for example, the server unit 10, the server unit 10 delivers the requested Web pages to the individual client units 20, ....

The client units 20, ... which include mobile phones, PDAs, and PCs, have a plurality of application programs activated by operating the terminal device 20, including an Internet connecting program, a Web display program, a Web printing program, a mailing program, a word-processing program, and an image processing program. For example, the client unit 20 accesses the server unit 10 at a desired Web site and acquires the Web page and displays or prints it.

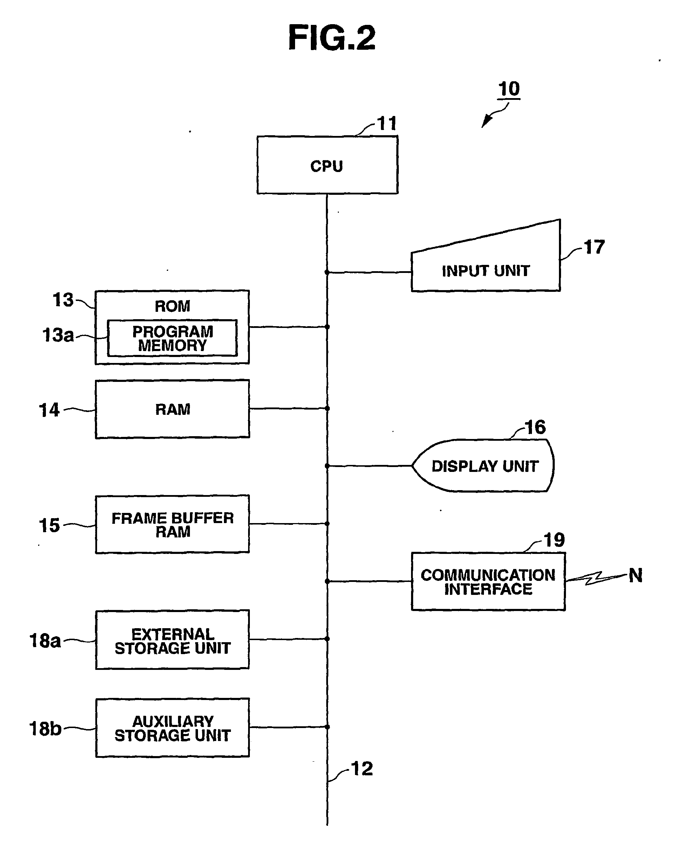

FIG. 2 is a block diagram showing the circuit configuration of the server unit 10 in the client-server system.

The server unit 10 includes a CPU 11 serving as a computer. A ROM 13, a RAM 14, a frame buffer RAM 15, and a display unit 16 are connected to the CPU 11 via a bus 12.

Further connected to the CPU 11 via the bus 12 are an input unit 17, such as a keyboard or a mouse, an external storage unit 18a, an auxiliary storage unit 18b, and a communication interface (I/F) 19 for communicating with the client units 20, ....

The CPU 11 controls the operation of each part of the circuit using the RAM 14 as a working memory according to a system program and various application programs prestored in a program memory 13a of the ROM 13. In response to, for example, a key input signal from the input unit 17 or a Web page acquisition request signal corresponding to the user operation from the client unit 20 received via the communication interface 19, the CPU 11 activates and executes the various programs.

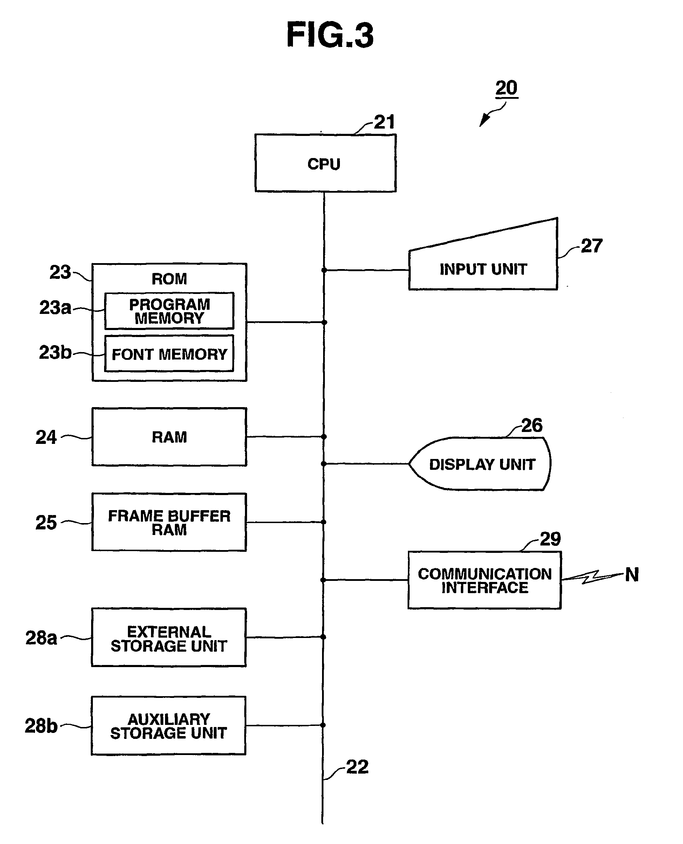

FIG. 3 is a block diagram showing the circuit configuration of the client unit 20 in the client-server system.

The client unit 20 includes a CPU 21 serving as a computer. A ROM 23, a RAM 24, and a frame buffer RAM 25 are connected to the CPU 21 via a bus 22. The drawing data written to the frame buffer 25 is output to a display unit 26, which displays the data.

Further connected to the CPU 21 via the bus 22 are an input unit 27, such as a keyboard or a mouse, an external storage unit 28a, an auxiliary storage unit 28b, and a communication interface (I/F) 29 for communicating with the server unit 10.

The CPU 21 controls the operation of each part of the circuit using the RAM 24 as a working memory according to a system program and various application programs prestored in a program memory 23a of the ROM 23. According to an input signal from the input unit 27, the CPU 21 activates and executes the various application programs.

The ROM 23 comprises a front memory 23b. Font pattern data of various letters and characters is stored in the font memory 23b. By use of the font pattern data, texts constituting web pages automatically received from the server unit 10 and documents prepared by terminals (20) are developed in the frame buffer RAM 25, and are displayed or printed.

If the server unit 10 is a Web site on the Internet (N) and the client units 20, ... are user terminals capable of accessing the Web site, a user terminal (20) delivers a Web page written in Hypertext Markup Language (HTML) at the Web site (10) to the access requesting user terminal (20) in response to the request for access to the Web site (10). The Web page is expanded by its Web browser and the expanded page is displayed on the display unit 26.

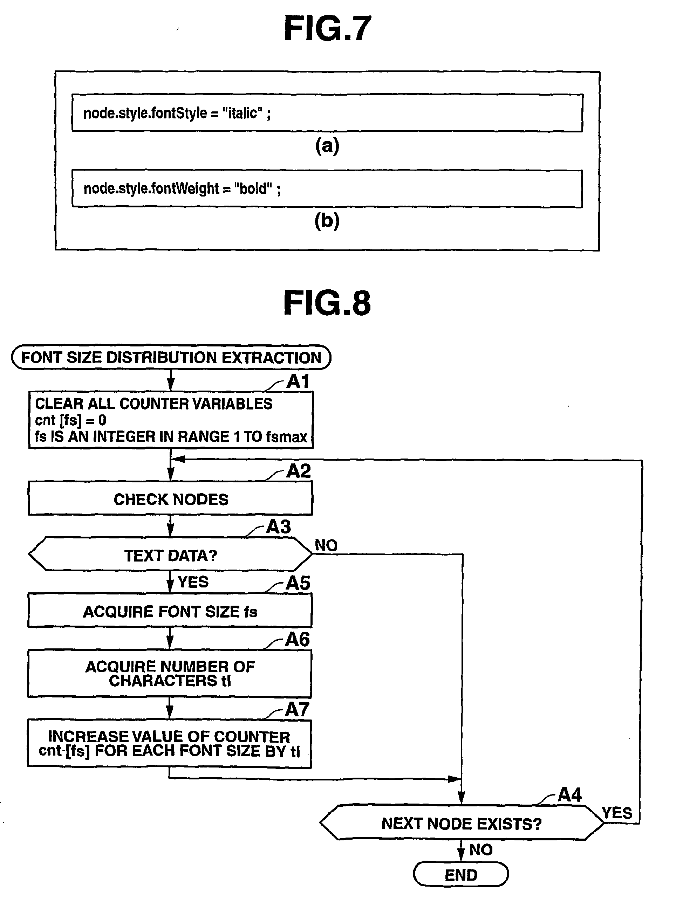

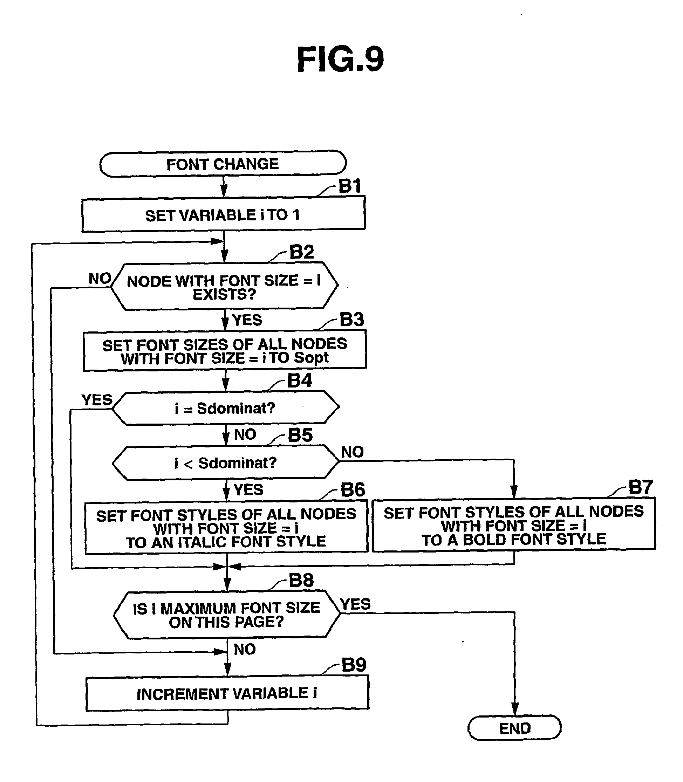

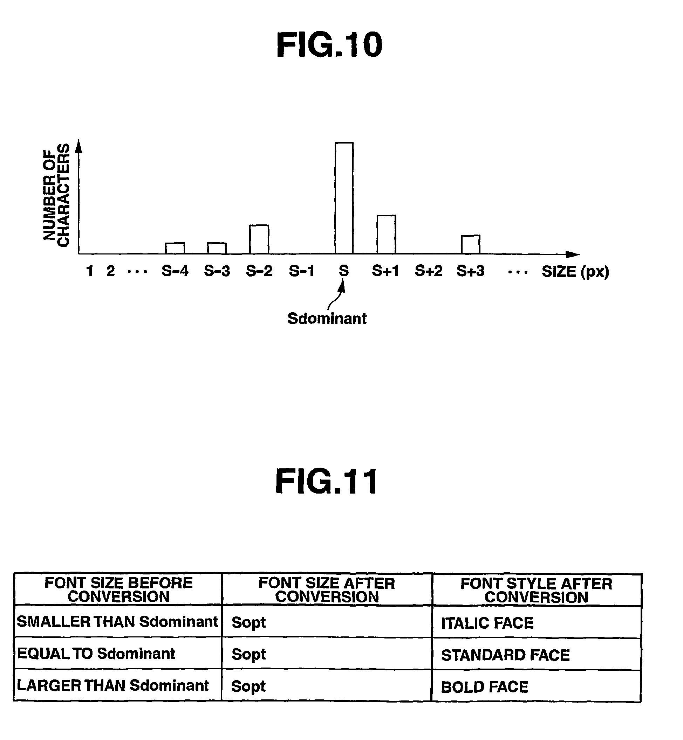

When the client unit 20 related to the information output apparatus receives a Web page from the server unit 10 and displays the page on the display unit 26, the client unit 20 carries out the process of extracting the font sizes of all the text items displayed on the Web page and generating the distribution of the font sizes (see FIGS. 8 and 10). The client unit 20 further carries out the process of not only changing the font sizes of all the text items to the optimum font size (Sopt) preset according to the screen size of the display unit 26 but also changing text items whose font size is larger than the most-frequently-used font size (Sdominant) determined from the font size distribution to text items of a bold font style and further changing text items whose font size is smaller than Sdominant to text items of an italic font style (see FIGS. 9, 11, and 12).

This makes it possible to change text items displayed in various sizes on the Web page to those of the optimum font size (Sopt) without losing the prominent strong-and-weak image, thereby displaying a user-friendly Web page.

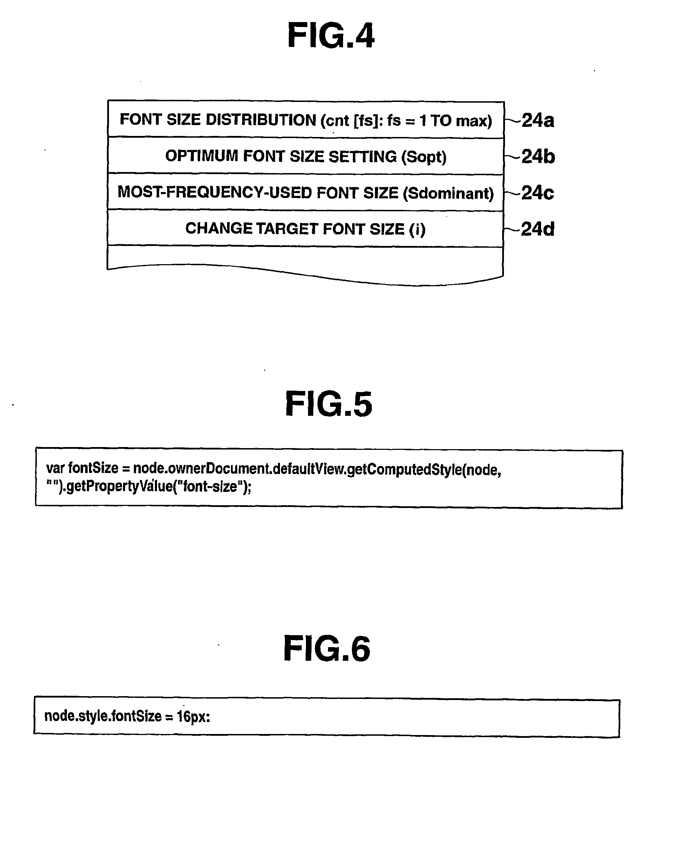

FIG. 4 shows the contents of a data memory secured in the RAM 24 of the client unit 20.

The RAM 24 of the client unit 20 prepares a font size distribution memory 24a, an optimum font size setting memory 24b, a most-frequently-used font size memory 24c, a change target font size memory 24d, and others.

In the font size distribution memory 24a, distribution data on the font sizes of all the text items displayed on the Web page acquired from the server unit 10 is stored in the form of distribution data (cnt[fs]:fs = 1 to max) obtained by counting the number of characters for each font size (pixel).

In the optimum font size setting memory 24b, the optimum font size (Sopt) preset according to the screen size of the display unit 26 or set arbitrarily by the user.

In the most-frequently-used font size memory 24c, the most-frequently-used font size (Sdominant) determined on the basis of the font size distribution stored in the font size distribution memory 24a is stored.

In the change target font size memory 24d, a font size to be changed in changing the fonts of the text items different in font size displayed on the Web page is stored.

In the client unit 20, when the Web page acquired from the server unit 10 is displayed on the display unit 26, both the process of extracting the font size distribution on the Web page (see FIGS. 8 and 10) and the process of changing the size and style of a font (see FIGS. 9, 11, and 12) are realized by a program plugged into or added to the Web browser of the client unit 20.

In the font size distribution extraction process, a program written in, for example, Java (registered trademark) script extracts the font sizes of all the nodes in a document object model (DOM) tree. Specifically, the program is as shown in FIG. 5.

FIG. 5 shows an example of a Java (registered trademark) script program for extracting the font size of text displayed on a Web page.

FIG. 6 shows an example of a Java (registered trademark) script program for changing the font size of text displayed on a Web page.

FIG. 7 shows an example of a Java (registered trademark) script program for changing the font style of text displayed on a Web page, (a) being a program for changing the font style to an italicized font and (b) being a program for changing the font style to a bold font.

Next, a Web-page font-size optimization function of the client unit 20 configured as described above will be explained.

FIG. 8 is a flowchart to explain the process of extracting the font size distribution on a Web page at the client unit 20.

FIG. 9 is a flowchart to explain a Web-page font changing process at the client unit 20.

FIG. 10 is a diagram showing font size distribution data before a change made by a Web-page font-size changing process at the client unit 20.

FIG. 11 is a table showing the descriptions of the font size and font style after a change on the basis of the most-frequently-used font size (Sdominant) set in the Web-page font-size changing process at the client unit 20.

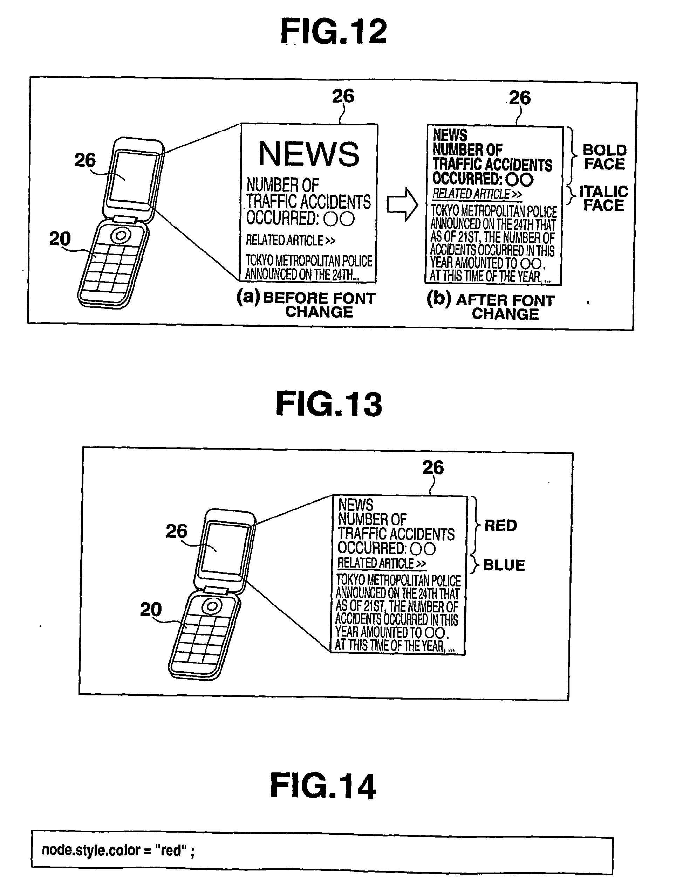

FIG. 12 is a diagram showing a comparison between a page display state (a) before a change and a page display state (b) after the change in the Web-page font-size changing process at the client unit 20.

First, the values of the counter variables corresponding to all the font sizes stored in the font size distribution memory 24a are cleared for initialization (cnt[fs] = 0:fs = 1 to max(px): px is a pixel) (step A1).

Next, a DOM tree of HTML data used to write the Web page is analyzed, checking each of the nodes (step A2). It is determined whether the node is a node where text data has been displayed (step A3).

If it has been determined that the checked node of the DOM tree is not a node where text data has been displayed (No in step A3), it is determined whether the next node exists (step A4).

If it has been determined that the next node exists (Yes in step A4), it is determined again whether the next node is a node where text data has been displayed (steps A2 and A3).

If it has been determined that the checked node of the DOM tree is a node where text data has been displayed (Yes in step A3), not only is the font size fs of the text data acquired (step A5) but also the number of characters tl in the text data is acquired (step A6) from the description of the node according to, for example, the program of FIG. 5.

Then, the value of the counter variable cnt[fs] corresponding to the acquired font size fs is increased by the acquired number of characters tl (step A7).

Thereafter, the processes in steps A2 to A7 are carried out repeatedly as described above, which causes the distribution of the font sizes of all the text data displayed on the Web page to be extracted as shown in, for example, FIG. 10. The extracted font size distribution is stored in the font size distribution memory 24a.

In FIG. 10, font size [S] represents the most-frequently-used font size (Sdominant) stored in the most-frequently-used font size memory 24c. In [S-1], [S-2], ..., [S-1] indicates a font size one pixel (px) smaller than the most-frequently-used font size (Sdominant) and [S-2] indicates a font size two pixels smaller than Sdominant. In [S+1], [S+2], ..., [S+1] indicates a font size one pixel larger than the most-frequently-used font size (Sdominant) and [S+2] indicates two pixels larger than Sdominant.

After the font size distribution data on the Web page acquired by the client unit 20 from the server unit 10 has been extracted as shown in FIG. 10 and stored in the font size distribution memory 24a, the font size changing process of FIG. 9 is activated.

In the font size changing process, first, the change target font size (i) is set to "1" for initialization (step B1).

Then, it is determined whether there is a node of the DOM tree where text of the change target font size (i=1) has been displayed (step B2). If it has been determined that there is not such a node (No in step B2), the change target font size (i) is incremented to "2" (step B9), and it is determined again whether there is a node of the DOM tree where text of the change target font size (i=2) has been displayed (step B2).

Thereafter, if it has been determined in step B2 that there is a node of the DOM tree where text of the change target font size (i) has been displayed (Yes in step B2), the font sizes of the text data items at all the nodes displayed in the change target font size (i) are changed to the optimum font size (Sopt) previously set and stored in the optimum font size setting memory 24b according to, for example, the program of FIG. 6 (step B3).

Then, it is determined whether the change target font size (i) is equal to the most-frequently-used font size (Sdominant) stored in the most-frequently-used font size memory 24c (step B4). If it has been determined that the change target font size (i) is not equal to Sdominant (No in step B4), it is further determined whether the change target font size (i) is smaller or larger than the most-frequently-used font size (Sdominant) (step B5).

If it has been determined that the change target font size (i) is smaller than the most-frequently-used font size (Sdominant) (Yes in step B5), the font styles of the text data items at all the nodes displayed in the change target font size (i) are changed to an italic font style less conspicuous than a normal font style according to, for example, the program shown by (a) in FIG. 7 (step B6).

If it has been determined that the change target font size (i) is larger than the most-frequently-used font size (Sdominant) (No in step B5), the font styles of the text data items at all the nodes displayed in the change target font size (i) are changed to a bold font style more conspicuous than the normal font style according to, for example, the program shown by (b) in FIG. 7 (step B7).

If in step B4, it has been determined that the change target font size (i) is equal to the most-frequently-used font size (Sdominant) (Yes in step B4), it is determined whether the change target font size (i) has reached the maximum font size stored in the font size distribution memory 24a on the Web page without carrying out the font style changing process in steps B5 to B7 (step B8).

Here, if it has been determined whether the change target font size (i) has not reached the maximum font size yet (No in step B8), the change target font size (i) is further incremented (step B9) and processing is performed again from step B2.

In this way, the processes in steps B2 to B9 are repeated, causing the font sizes of all the text data items displayed on the acquired Web page to be changed to the eye-friendly optimum font size (Sopt) previously set and stored. At the same time, text data whose font size is equal to the most-frequently-used font size (Sdominant) is caused to remain in the standard font size, text data whose font size is smaller than the most-frequently-used font size (Sdominant) is changed to an italic font style less conspicuous than the standard font style, and text data whose font size is larger than the most-frequently-used font size (Sdominant) is changed to a bold font style more conspicuous than the standard font style.

Accordingly, on a Web page display screen obtained by subjecting a Web page display screen whose font size has not been changed on the small display unit 26 of the client unit 20 as shown by (a) of FIG. 12 to the font changing process as shown by (b) of FIG. 12, text whose font size is too large is changed to the optimum font size (Sopt), which makes it possible to increase the information mount of the entire page remarkably without impairing the eye-friendly state. Moreover, text whose font size is too small is also changed to the optimum font size (Sopt), which makes it possible to eliminate unreadable information. In addition, since text whose original font size is large is changed to a bold font style and text whose font size is small is changed to an italic font style, it is possible to maintain the correlation in conspicuousness between the text items on the entire page taken into account at the time of creating the page.

Thereafter, in step B8, if the change target font size (i) has reached the maximum font size stored in the font size distribution memory 24a on the Web page (Yes in step B8), it is determined that the process of changing the font sizes and font styles of all the text data items existing on the Web page has been completed and the series of font changing processes is terminated (End).

Accordingly, with the font optimization changing function of the client unit 20 configured as described above, after the most-frequently-used font size (Sdominant) has been determined on the Web page acquired from the server unit 20, the font sizes of all the text items are changed to a preset optimum font size (Sopt). At the same time, text whose original font size is smaller than the most-frequently-used font size (Sdominant) is changed to an inconspicuous italic font pattern and text whose original font size is larger than Sdominant is changed to a conspicuous bold font pattern.

Therefore, all of the characters can be read sufficiently without impairing the strong and weak information image of the entire page.

In the embodiment, not only is the font sizes of the text items on the entire Web page changed to the optimum font size (Sopt), but also text whose font size is larger than the most-frequently-used font size (Sdominant) is changed to a conspicuous bold font style and text whose font size is smaller than Sdominant is changed to an inconspicuous italic font style to maintain the conspicuousness balance between the text items before the change. In contrast, as shown in one other embodiment (1) of the invention in FIG. 13, text whose font size is larger than the most-frequently-used font size (Sdominant) may be changed to a conspicuous red font style and text whose font size is smaller than Sdominant may be changed to an inconspicuous blue font style.

Like the above embodiment, this embodiment makes it possible not only to change the font sizes of the text items on the entire page to an easy-to-read font size but also to maintain the correlation in conspicuousness between the text items on the entire page taken into account at the time of creating the page.

FIG. 13 shows a page display state after the change of the font size/color style in the Web-page font-size changing process according to the one other embodiment (1) of the client unit 20.

FIG. 14 shows an example of a Java (a registered trademark) script program for changing the color font style of text displayed on a Web page.

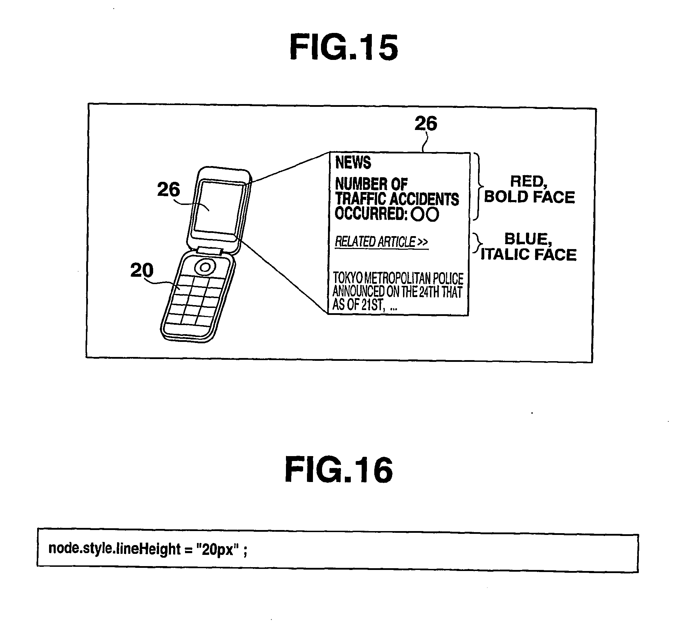

Furthermore, as shown in still one other embodiment (2) of the invention in FIG. 15, the above embodiment may be combined with the font optimization changing function in the one other embodiment (1).

FIG. 15 shows a page display state after the change of the font size/character style and color style in the Web-page font-size changing process according to the still one other embodiment (2) of the client unit 20.

FIG. 16 shows an example of a Java (registered trademark) script program for changing the line spacing of text displayed on a Web page.

In the still one other embodiment (2), not only are the font sizes of the text items on the entire Web page changed to the optimum font size (Sopt), but also text whose font size is larger than the most-frequently-used font size (Sdominant) is changed to a conspicuous bold, red font style and text whose font size is smaller than Sdominant is changed to an inconspicuous italic, blue font style. In addition, the line spacing where the font size of the original text is changed is made wider than the normal one.

As in each of the above embodiments, in this embodiment, it is possible not only to change the font sizes of the text items on the entire page to an easy-to-read font size but also to maintain more effectively the correlation in conspicuousness between the text items on the entire page taken into account at the time of creating the page.

In the font optimization changing function of each of the above embodiments, pixel values (px) have been used as font sizes. Even when a display font size is determined and controlled by specifying a percentage (%) of the font size with a default font size as a reference, the same font size optimization changing function may, of course, be applied.

While in each of the embodiments, the optimum font size (Sopt) has been set previously according to the display screen size of the display unit 26 or set arbitrarily by the user, table data for setting the optimum font size (Sopt) according to the display screen size may be stored in advance together with a font size changing program and the optimum font size (Sopt) may be selected automatically according to the display screen size.

As for the most-frequently-used font size (Sdominant) set on the basis of the Web-page font size distribution data in each of the embodiments, a font size whose frequency of use is relatively high (Sdominant) may be used in place of the most-frequently-used font size in the font size distribution.

In each of the embodiments, various application programs have been installed in the client unit 20 configured to function as the information output apparatus and the client unit 20 has been used as a PC, a PDA, or a mobile phone which can operate independently. In contrast, when a Web page received from the server unit as in each of the embodiments is changed and displayed using easy-to-read fonts in a balanced manner in a client unit of a server-based computing (SBC) system typified by a thin client system, the font size distribution extraction program shown in FIG. 8 and the font changing programs shown in FIG. 9 are installed in the server unit. Then, the server unit carries out the Web-page font size changing process on the basis of the display screen size of the client unit and the font style changing process on the basis of the most-frequently-used font size (Sdominant) in response to a Web page request access from the client unit and delivers the resulting Web page to the client unit.

While in each of the embodiments, the font optimization changing function has been applied to a case where the client unit displays a Web page, it may be applied without any modification to a case where a printer unit prints out data. In the printer unit, the optimum font size (Sopt) may be set according to the print size. In addition, the character style and color font style may be changed with the most-frequently-used font size (Sdominant) as a reference.

The font optimization changing function explained in each of the embodiments may be applied not only to Web pages but also to pages for display or printing where text items of a plurality of font sizes are mixed, which produces the same operational advantages.

The processes at the information processing apparatus of each of the embodiments, including the font size distribution extraction process shown in the flowchart of FIG. 8 and the font changing process shown in the flowchart of FIG. 9, can be stored in a medium of an external storage unit 28a (18a), such as a memory card (e.g., a ROM card or a RAM card), a magnetic disk (e.g., a floppy disk or a hard disk), an optical disk (e.g., a CD-ROM or a DVD), or a semiconductor memory, in the form of programs the computer can execute. Accordingly, the processes at the information processing apparatus of each of the embodiments, including the font size distribution extraction process shown in the flowchart of FIG. 8 and the font changing process shown in the flowchart of FIG. 9 are implemented as a sequence of computer implemented modules. Then, the program-stored media can be delivered. The computer (CPU 21 [11]) of the information output apparatus reads the program stored in the medium of the external storage unit 28a (18a) into a storage unit (e.g., a flash ROM 23 [13] or a RAM 24 [14]). The computer is controlled by the read program, thereby realizing the font optimization changing function explained in each of the embodiments, which enables the same processes to be carried out by the aforementioned methods.

Furthermore, the data of the programs which realize the above methods can be transferred in the form of program code through a communication network (N). The program data can be loaded from a computer unit (or a program server) connected to the communication network (N) into a storage unit (e.g., a flash ROM 23 [13] or a RAM 24 [14]), thereby realizing the font optimization changing function.

Additional advantages and modifications will readily occur to those skilled in the art. Therefore, the invention in its broader aspects is not limited to the specific details and representative embodiments shown and described herein. Accordingly, various modifications may be made without departing from the scope of the general inventive concept as defined by the appended claims and their equivalents.

## Claims

1. An information output apparatus comprising:
a size distribution extraction module which extracts the frequency of use for each of font sizes of text items included in the display data;
a size decision module which determines a font size whose frequency of use is high in the frequencies of use for the individual font sizes extracted by the size distribution extraction module;
a size change module which changes the font sizes of the text items included in the display data to the specific font size;
a first style change module which changes fonts of the text items judged as having a font size smaller, than the font size whose frequency of use is high by the size decision module to a first font style before the size change occurs in the text items, in which the fonts have been changed to the specific font size by the size change module; and
a second style change module which changes the fonts of the text items judged as having a font size larger than the font size whose frequency of use is high by the size decision module to a second font style, which is different from the first font style, before the size change occurs in the text items, in which the fonts have been changed to the specific font size by the size change module.

2. The information output apparatus according to claim 1, wherein the changing to the first and second font styles by the first and second style change modules is the changing to an italic font and a bold font, the first font style being different from the second font style.

3. The information output apparatus according to claim 1, wherein the changing to the first and second font styles by the first and second style change modules is the changing to a blue font and a red font, a color of a first font being different from a color of a second font.

4. The information output apparatus according to claim 1, wherein the changing to the first and second font styles by the first and second style change modules is the changing in a typeface of the font and the changing to a color font, a first font being different from a second font in the typeface and color.

5. A recording medium in which the process of outputting display data has been recorded in the form of a program and from which a computer of an information output apparatus is capable of reading instructions, the program including:
a process of extracting the frequency of use for each of font sizes of text items included in the display data;
a process of determining a font size whose frequency of use is high in the frequencies of use for the individual font sizes extracted;
a process of changing the font sizes of the text items included in the display data to a specific font size;
a process of changing fonts of the text items, which are judged as having a font size smaller than the font size whose frequency of use is high, to a first font style before the size change occurs in the text items, in which the fonts have been changed to the specific font size; and
a process of changing the fonts of the text items, which are judged as having a font size larger than the font size whose frequency of use is high, to a second font style different from the first font style, before the size change occurs in the text items, in which the fonts have been changed to the specific font size.

6. An information output method of controlling a computer of an information output apparatus which outputs display data, the information output method comprising:
a process of extracting the frequency of use for each of font sizes of text items included in the display data;
a process of determining a font size whose frequency of use is high in the frequencies of use for the individual font sizes extracted;
a process of changing the font sizes of the text items included in the display data to a specific font size;
a process of changing fonts of the text items, which are judged as having a font size smaller than the font size whose frequency of use is high, to a first font style before the size change occurs in the text items, in which the fonts have been changed to the specific font size; and
a process of changing the fonts of the text items, which are judged as having a font size larger than the font size whose frequency of use is high, to a second font style before the size change occurs in the text items, in which the fonts have been changed to the specific font size.

## Patentansprüche

1. Informationsausgabevorrichtung, die umfasst:
ein Größenverteilungs-Extraktionsmodul, das die Verwendungshäufigkeit für alle Schriftgrößen von Textelementen extrahiert, die in den Anzeigedaten enthalten sind;
ein Größen-Entscheidungsmodul, das eine Schriftgröße bestimmt, deren Verwendungshäufigkeit von den für die einzelnen Schriftgrößen durch das Größenverteilungs-Extraktionsmodul extrahierten Verwendungshäufigkeiten hoch ist;
ein Größen-Änderungsmodul, das die Textgrößen der in den Anzeigedaten enthaltenen Textelemente auf die spezifische Schriftgröße ändert;
ein erstes Schnitt-Änderungsmodul, das Schriftarten der Textelemente, für die durch das Größen-Entscheidungsmodul festgestellt wurde, dass sie eine Schriftgröße haben, die kleiner ist als die Schriftgröße, deren Verwendungshäufigkeit hoch ist, auf einen ersten Schriftschnitt ändert, bevor die Größenänderung bei den Textelementen stattfindet, bei denen die Schriften durch das Größen-Änderungsmodul auf die spezifische Schriftgröße geändert worden sind; und
ein zweites Schnitt-Änderungsmodul, das die Schriften der Textelemente, für die durch das Größen-Entscheidungsmodul festgestellt wurde, dass sie eine Schriftgröße haben, die größer ist als die Schriftgröße, deren Verwendungshäufigkeit hoch ist, auf einen zweiten Schriftschnitt ändert, der sich von dem ersten Schriftschnitt unterscheidet, bevor die Größenänderung bei den Textelementen stattfindet, bei denen die Schriften durch das Größen-Änderungsmodul auf die spezifische Schriftgröße geändert worden sind.

2. Informationsausgabevorrichtung nach Anspruch 1, wobei das Ändern auf den ersten und den zweiten Schriftschnitt durch das erste und das zweite Schnitt-Änderungsmodul die Änderung auf eine Kursivschrift sowie eine Fettschrift ist und sich der erste Schriftschnitt von dem zweiten Schriftschnitt unterscheidet.

3. Informationsausgabevorrichtung nach Anspruch 1, wobei das Ändern auf den ersten und den zweiten Schriftschnitt durch das erste und das zweite Schnitt-Änderungsmodul das Ändern auf eine blaue Schrift sowie eine rote Schrift ist und sich eine Farbe der ersten Schrift von einer Farbe einer zweiten Schrift unterscheidet.

4. Informationsausgabevorrichtung nach Anspruch 1, wobei das Ändern auf den ersten und den zweiten Schriftschnitt durch das erste und das zweite Schnitt-Änderungsmodul das Ändern einer Schriftart der Schrift sowie das Ändern auf eine farbige Schrift ist und sich eine erste Schrift von einer zweiten Schrift in der Schriftart und Farbe unterscheidet.

5. Aufzeichnungsmedium, auf dem der Prozess zum Ausgeben von Anzeigedaten in Form eines Programms aufgezeichnet worden ist und von dem ein Computer einer Informationsausgabeeinrichtung Befehle lesen kann, wobei das Programm einschließt:
einen Prozess zum Extrahieren der Verwendungshäufigkeit aller Schriftgrößen von Textelementen, die in den Anzeigedaten enthalten sind;
einen Prozess des Bestimmens einer Schriftgröße, deren Verwendungshäufigkeit von den für die einzelnen Schriftgrößen extrahierten Verwendungshäufigkeiten hoch ist;
einen Prozess des Änderns der Schriftgrößen der in den Anzeigedaten enthaltenen Textelemente auf eine bestimmte Schriftgröße;
einen Prozess des Änderns von Schriften der Textelemente, für die festgestellt wird, dass sie eine Schriftgröße haben, die kleiner ist als die Schriftgröße, deren Verwendungshäufigkeit hoch ist, auf einen ersten Schriftschnitt, bevor die Größenänderung bei den Textelementen stattfindet, bei denen die Schriften auf die spezifische Schriftgröße geändert worden sind; und
einen Prozess des Änderns der Schriften der Textelemente, für die festgestellt wird, dass sie eine Schriftgröße haben, die größer ist als die Schriftgröße, deren Verwendungshäufigkeit hoch ist, auf einen zweiten Schriftschnitt, der sich von dem ersten Schriftschnitt unterscheidet, bevor die Größenänderung bei den Textelementen stattfindet, bei denen die Schriften auf die spezifische Schriftgröße geändert worden sind.

6. Informationsausgabeverfahren zum Steuern eines Computers einer Informationsausgabevorrichtung, die Anzeigedaten ausgibt, wobei das Informationsausgabeverfahren umfasst:
einen Prozess zum Extrahieren der Verwendungshäufigkeit aller Schriftgrößen von Textelementen, die in den Anzeigedaten enthalten sind;
einen Prozess des Bestimmens einer Schriftgröße, deren Verwendungshäufigkeit von den für die einzelnen Schriftgrößen extrahierten Venrvendungshäufigkeiten hoch ist;
einen Prozess des Änderns der Schriftgrößen der in den Anzeigedaten enthaltenen Textelemente auf eine bestimmte Schriftgröße;
einen Prozess des Änderns von Schriften der Textelemente, für die festgestellt wird, dass sie eine Schriftgröße haben, die kleiner ist als die Schriftgröße, deren Verwendungshäufigkeit hoch ist, auf einen ersten Schriftschnitt, bevor die Größenänderung bei den Textelementen stattfindet, bei denen die Schriften auf die spezifische Schriftgröße geändert worden sind; und
einen Prozess des Änderns der Schriften der Textelemente, für die festgestellt wird, dass sie eine Schriftgröße haben, die größer ist als die Schriftgröße, deren Verwendungshäufigkeit hoch ist, auf einen zweiten Schriftschnitt, bevor die Größenänderung bei den Textelementen stattfindet, bei denen die Schriften auf die spezifische Schriftgröße geändert worden sind.

## Revendications

1. Dispositif de délivrance d'informations comportant :
un module d'extraction de distribution de taille qui extrait la fréquence d'utilisation pour chacune des tailles de fontes de caractères d'éléments de texte inclus dans les données d'affichage ;
un module de décision de taille qui détermine une taille de fonte de caractères dont la fréquence d'utilisation est élevée parmi les fréquences d'utilisation pour les tailles de fontes de caractères individuelles extraites par le module d'extraction de distribution de taille ;
un module de changement de taille qui modifie les tailles de fontes de caractères des éléments de texte inclus dans les données d'affichage à la taille de fonte de caractères spécifique ;
un premier module de changement de style qui change les fontes de caractères des éléments de texte, estimées comme ayant une taille de fonte de caractères inférieure à la taille de fonte de caractères dont la fréquence d'utilisation est élevée par le module de décision de taille en un premier style de fonte de caractères avant que le changement de taille se produise dans les éléments de texte, dans lesquels les fontes de caractères ont été modifiées à la taille de fonte de caractères spécifique par le module de modification de taille ; et
un second module de changement de style qui modifie les fontes de caractères des éléments de texte, estimées comme ayant une taille de fonte de caractères supérieure à la taille de fonte de caractères dont la fréquence d'utilisation est élevée par le module de décision de taille en un second style de fonte de caractères, qui est différent du premier style de fonte de caractères, avant que le changement de taille se produise dans les éléments de texte, dans lesquels les fontes de caractères ont été modifiées en la taille de fonte de caractères spécifique par le module de changement de taille.

2. Dispositif de délivrance d'informations selon la revendication 1, dans lequel la modification aux premier et second styles de fontes de caractères par les premier et second modules de changement de style est la modification en une fonte de caractères italique et une fonte de caractères grasse, le premier style de fonte de caractères étant différent du second style de fonte de caractères.

3. Dispositif de délivrance d'informations selon la revendication 1, dans lequel le changement aux premier et second styles de fonte de caractères par les premier et second modules de changement de style est le changement en une fonte de caractères bleue et une fonte de caractères rouge, la couleur d'une première fonte de caractères étant différente de la couleur d'une seconde fonte de caractères.

4. Dispositif de délivrance d'informations selon la revendication 1, dans lequel la modification aux premier et second styles de fonte de caractères par les premier et second modules de changement de style est le changement dans la police de la fonte de caractères et le changement en une couleur de fonte de caractères, une première fonte de caractères étant différente d'une seconde fonte de caractères en ce qui concerne la police et la couleur.

5. Support d'enregistrement dans lequel le processus de délivrance de données d'affichage a été enregistré sous la forme d'un programme et à partir duquel un ordinateur d'un dispositif de délivrance d'informations peut lire les instructions, le programme comportant :
un processus d'extraction de la fréquence d'utilisation pour chacune des tailles de fontes de
caractères des éléments de texte inclus dans les données d'affichage ;
un processus de détermination d'une taille de fonte de caractères dont la fréquence d'utilisation est élevée parmi les fréquences d'utilisation pour les tailles de fontes de caractères individuelles extraites ;
un processus de modification de taille de fonte de caractères des éléments de texte inclus dans les données d'affichage en une taille de fonte de caractères spécifique;
un processus de modification des fontes de caractères des éléments de texte, qui sont estimées posséder une taille de fonte de caractères inférieure à la taille de fonte de caractères dont la fréquence d'utilisation est élevée, en un premier style de fonte de caractères avant que la modification de taille se produise dans les éléments de texte, dans lesquels les fontes de caractères ont été modifiées à la taille de fonte de caractères spécifique ; et
un processus de modification des fontes de caractères des éléments de texte, qui sont estimées posséder une taille de fonte de caractères supérieure à la taille de fonte de caractères dont la fréquence d'utilisation est élevée, en un second style de fonte de caractères différent du premier style de fonte de caractères, avant que la modification de taille se produise dans les éléments de texte, dans lesquels les fontes de caractères ont été modifiées à la taille de fonte de caractères spécifique.

6. Procédé de délivrance d'informations pour contrôler un ordinateur d'un dispositif de délivrance d'informations qui délivre des données d'affichage, le procédé de délivrance d_{'}informations comportant :
un processus d'extraction de la fréquence d'utilisation pour chacune des tailles de fontes de caractères des éléments de texte inclus dans les données d'affichage ;
un processus de détermination d'une taille de fonte de caractères dont la fréquence d'utilisation est élevée parmi les fréquences d'utilisation pour les tailles de fontes de caractères individuelles extraites ;
un processus de modification des tailles de fontes de caractères des éléments de texte inclus dans les données d'affichage à une taille de fonte de caractères spécifique ;
un processus de modification de fonte de caractères des éléments de texte, qui sont estimées posséder une taille de fonte de caractères inférieure à la taille de fonte de caractères dont la fréquence d'utilisation est élevée, à un premier style de fonte de caractères avant que la modification de taille se produise dans les éléments de texte, dans lesquels les fontes de caractères ont été modifiées à la taille de fonte de caractères spécifique ; et
un processus de modification des fontes de caractères des éléments de textes, qui sont estimées posséder une taille de fonte de caractères supérieure à la taille de fonte de caractères dont la fréquence d'utilisation est élevée, en un second style de fonte de caractères avant que la modification de taille se produise dans les éléments de texte, dans lesquels les fontes de caractères ont été modifiées à la taille de fonte de caractères spécifique.
